## Europäisches Patentamt
## European Patent Office
## Office européen des brevets

(19)

(11) Numéro de publication: **0 029 124**
**B1**

(12)

# FASCICULE DE BREVET EUROPEEN

(45) Date de publication du fascicule du brevet: **29.08.84**

(51) Int. Cl.³: **H 01 M 4/96**

(21) Numéro de dépôt: **80106333.0**

(22) Date de dépôt: **17.10.80**

(54) Elément pour générateur électrochimique.

(30) Priorité: **18.10.79 FR 7925879**

(43) Date de publication de la demande:
**27.05.81 Bulletin 81/21**

(45) Mention de la délivrance du brevet:
**29.08.84 Bulletin 84/35**

(84) Etats contractants désignés:
**BE CH DE FR GB IT LI LU NL SE**

(56) Documents cités:
**FR-A-2 215 710**
**FR-A-2 258 007**
**FR-A-2 344 969**
**US-A-3 553 022**
**US-A-3 733 221**
**US-A-4 104 197**

(73) Titulaire: **SOCIETE GENERALE DE CONSTRUCTIONS ELECTRIQUES ET MECANIQUES "ALSTHOM et Cie" Société en nom collectif dite**
**38, Avenue Kléber**
**F-75784 Paris Cedex 16 (FR)**

(72) Inventeur: **Warszawski, Bernard**
**122, avenue de Wagram**
**F-75017 Paris (FR)**

(74) Mandataire: **Weinmiller, Jürgen**
**Zeppelinstrasse 63**
**D-8000 München 80 (DE)**

Courier Press, Leamington Spa, England.

EP 0 029 124 B1

**Description**

La présente invention concerne un élément pour générateur électrochimique comprenant une électrode poreuse plane, un collecteur de courant en contact avec une des faces de ladite électrode et une membrane en contact avec l'autre face.

Un tel élément est applicable notamment dans une pile à combustible destinée à consommer un premier réactif gazeux oxydant et un second réactif gazeux réducteur, réactifs tels que l'hydrogène comme réducteur, l'oxygène, l'air atmosphérique comme oxydants, entre autres, et utilisant un électrolyte liquide. L'invention s'applique en particulier à une pile type filtre-presse telle que décrite dans le document DE—A—25 02 738.

On rappelle que dans une telle pile le transfert du courant entre électrodes voisines appartenant à deux éléments adjacents est assuré au moyen de collecteurs gaufrés à conductivité électronique qui sont soit en contact, soit soudés, soit collés aux électrodes et cela par points ou par lignes mutuellement espacés selon des distances de l'ordre du millimètre.

On sait qu'une électrode de pile à combustible alimentée par un réactif gazeux doit comporter au moins une couche dite catalytique ou active en contact avec l'électrolyte par une face libre et alimentée en réactif gazeux par l'autre face. Plus précisément la couche catalytique doit être apte à réaliser le processus électrochimique, et pour cela comporter une porosité dans laquelle s'établit, entre l'électrolyte qui pénètre par la face mouillée, et le réactif gazeux qui arrive par l'autre face, un front liquide-gaz dont la ligne de contact avec la surface de la couche poreuse, dite "ligne triple", constitue le domaine d'existence de la zone réactionnelle; elle doit en outre comporter, au moins dans la région de cette ligne triple, un électrocatalyseur ausceptible de catalyser, suivant le cas, la réaction d'oxydation ou de réduction du réactif gazeux, électrocatalyseur en contact avec un conducteur électronique, luimême en relation électrique continue avec les moyens de collection du courant susceptibles d'évacuer de l'électrode ou de lui fournir les électrons produits ou consommés dans la réaction.

Une couche catalytique comporte donc généralement: un catalyseur, un conducteur électronique (le plus souvent un métal ou du carbone) et, lorsqu'aucun des précédents ne forme une phase continue, un liant, le plus souvent hydrophobe.

Dans les électrodes de l'art antérieur, on a cherché, pour maximiser l'étendue de la ligne triple, à faire pénétrer l'électrolyte liquide à l'intérieur de la couche catalytique ou active. A cet effet, on a choisi pour cette dernière des compositions de matériaux telles que la couche se trouve être globalement hydrophile, ou, plus précisément, globalement mouillable; ceci était obtenu, lorsque le liant était hydrophobe, avec une proportion de liant suffisamment faible par rapport à celles des autres matériaux, hydrophiles, de la couche: généralement moins de 50%, et, le plus souvent, moins de 40% et même moins de 30% de l'ensemble de la couche. C'est le cas, par exemple de la couche catalytique décrite dans le brevet américain N° 3 553 022 qui peut ainsi comprendre 30% en poids de polytétrafluoréthylène, agissant comme liant et 70% de platine agissant comme catalyseur.

Cependant, avec une couche catalytique ou active globalement mouillable, la pénétration de l'électrolyte finit par être totale, imbibant complètement la couche et excluant de ce fait toute pénétration du réactif gazeux, et, par suite, faisant disparaître quasi complètement la ligne triple. Pour remédier à cette situation dans les électrodes de l'art antérieur, on a associé à la couche catalytique, du côté gaz, une seconde couche poreuse dite généralement couche d'arrêt, présentant la propriété, le plus souvent grâce à sa nature hydrophobe, d'interdire la pénétration de l'électrolyte dans sa porosité. Da ce fait, le front liquide-gaz se trouvait stabilisé à l'interface des deux couches.

En ce qui concerne la couche d'arrêt, celle-ci doit donc permettre grâce à sa porosité, aux réactifs gazeux tels que l'hydrogène ou l'air d'atteindre la couche catalytique par diffusion, mais tout en évitant tout cheminement inverse de l'électrolyte vers le compartiment à gaz de l'électrode; mais elle doit en outre permettre aussi les transferts d'électrons entre la couche catalytique et le collecteur.

Dans ce but, une telle couche macroscopiquement homogène devrait donc comporter un matériau hydrophobe donc électroniquement isolant ainsi qu'un matériau électroniquement conducteur. Les deux fonctions essentielles d'une telle couche d'arrêt apparaissent donc en contradiction mutuelle: si la teneur en matériau hydrophobe est élevée, la conductivité électronique est faible et donc les performances aussi; si la teneur en matériau conducteur est élevée, le caractère hydrophobe est insuffisant entraînant la pénétration relativement rapide de l'électrolyte et donc une faible durée de vie.

Dans les électrodes connues, une telle contradiction n'a pu être résolue. Pour pallier de tels inconvénients on a donc été amené à réaliser des électrodes (voir le document FR—A—22 15 710) comportant, en plus de la couche catalytique, une couche d'arrêt à fort taux de liant hydrophobe et composant supplémentaire à faible taux de liant ou constitue même de matériau électroniquement conducteur seulement, de manière à conférer une conductivité électronique suffisante à l'électrode compensant ainsi la conductivité médiocre de la couche hydrophobe. Ces électrodes comportant donc, par exemple, une grille ou un déployé métallique, ou une membrane de fibres du type viscose, préalablement calcinée, etc., imbriquée dans la couche catalytique.

Cependant de telles électrodes connues présentent un certain nombre d'inconvénients.

En premier lieu leur complexité entraîne une épaisseur notable, ce que se traduit par une augmentation non négligeable de l'encombrement des générateurs électrochimiques dans lesquels elles sont mises en oeuvre. En outre, ces électrodes, de par la présence d'un troisième composant conducteur, présentent une certaine rigidité se traduisant par une fragilité mécanique importante, surtout au sein d'une structure du type filtre-presse telle que la pile de la Demanderesse décrite plus haut, ainsi que par des difficultés d'interconnection et d'association dans ladite structure.

Même dans ls cas où ces électrodes ne comporteraient que deux couches, le fait, que la couche catalytique présentant un caractère hydrophile, comporte une teneur relativement faible en liant la rend particulièrement fragile lors de la manipulation de l'électrode et en présence des sollicitations, contraintes, etc., mécaniques ou thermique de toute nature au cours du montage en pile, puis du fonctionnement, augmentant ainsi son coût et diminuant sa durée de vie.

Dans le cas où un troisième constituant a été prévu, par exemple un tissu de carbone au sein duquel est contenue la couche catalytique, de dernier crée une inhomogénéité au sein de l'électrode, qui peut entraîner la décohésion de cette dernière, en cours de fonctionnement, notamment en raison des coefficients de dilatation différents présentés par le liant et le matériau constitutif de ce troisième constituant. De plus le caractère hydrophile du tissu de carbone, qui est également en contact avec la couche d'arrêt, crée les conditions d'une inhibition particulièrement rapide des couches active et d'arrêt au voisinage de leur interface, ce qui abaisse considérablement la durée de vie. Il faut également noter que la couche active n'occupant que les vides des mailles de ce troisième constituant, la densité de courant effective que supporte la couche active est nettement plus élevée que la densité de courant moyenne apparente, augmentant ainsi la polarisation et réduisant la durée de vie.

Par ailleurs, dans les électrodes connues, leur épaisseur notable exige une porosité élevée de leur structure qui doit leur être conférée en général par l'utilisation de produits porophores lors de leur fabrication, produits dont l'élimination ultérieure peut être incomplète et qui peuvent entraîner une hétérogénéité de structure avec le risque d'apparition de macroporosités susceptibles d'altérer le fonctionnement de l'électrode, par exemple en favorisant le perlage ("weeping") de l'électrolyte.

Enfin elles se révèlent d'une réalisation relativement malaisée, surtout à un échelon industrial, donc d'un prix de revient élevé.

L'invention a pour but notamment de remédier aux inconvénients précités.

Elle vise en particulier l'obtention d'un élément pour une électrode présentant une durée de vie notablement augmentée par rapport aux électrodes de la technique antérieure. Ce but est atteint par l'élément tel que spécifié au début de ce texte, qui est caractérisé selon l'invention par le fait que ladite électrode comprend uniquement une couche active ou catalytique et une couche support, l'épaisseur de ladite électrode étant comprise entre 50 et 600 $\mu$m environ, la couche active ou catalytique et la couche support comportant chacune en poids 60 à 99% d'un polymère ou liant hydrophobe, et 40 à 1% d'un composé conducteur divisé à base de carbone, ledit composé conducteur constitutif de la couche catalytique étant chargé ou associé à un catalyseur de la réaction électrochimique concernée, les deux dites couches étant globalement hydrophobes et intimement liées, le prélèvement du courant étant effectué par points ou par lignes mutuellement espacés d'une distance de l'ordre du millimètre au moyen du collecteur qui est gaufré et qui est en contact avec ladite couche support de l'électrode et la couche support d'une électrode voisine, la membrane poreuse et gaufrée étant en contact avec la couche active de l'électrode et la couche d'une électrode voisine.

L'électrode de l'élément selon l'invention, de structure simple, est à la fois mince, souple, et elle peut être réalisée à une cadence industrielle continue sous forme de bandes de très grande longueur et selon un prix de revient minimal. Elle permet en outre d'obtenir des puissances élevées selon un rendement électrochimique maximal.

On voit donc qu'il est possible de réaliser un élément évitant les inconvénients des éléments précédents, en constituant l'électrode de cet élément de deux couches au maximum, à savoir une couche support et une couche active ou catalytique formant au total une épaisseur inférieure à un millimètre, et en mettant en oeuvre dans ces deux couches, chacune étant constituée essentiellement d'un liant et de carbone divisé, simultanément un taux de liant hydrophobe très élevé et sensiblement voisin, de façon à leur conférer simultanément: a) un caractère globalement hydrophobe, b) une cohésion structurelle élevée, c) des propriétés mécaniques et thermiques voisines, ainsi qu'à permettre une adhérence élevée des deux couches, cette adhérence pouvant aller jusqu'à se traduire par la formation d'un réseau continu du liant.

En plus des propriétés espérées comme résultat de cette construction, notamment sur les plans de simplicité de fabrication, de la cohésion structurelle, de l'aptitude à supporter les déformations, les mainpulations, les frottements et les contraintes mécaniques de toute nature sans dommages, de la capacité de se dilater et de se contracter thermiquement sans décohésion et sans apparition de lésions, telles que des fissures, l'élément selon l'invention présente en outre les propriétés suivantes:

a) malgré la relativement faible conductivité de la couche support due à la proportion élevée de liant par rapport au carbone divisé conducteur, l'électrode, associée à un prélèvement du courant sur la surface de cette couche par points ou par lignes mutuellement espacés d'une distance de l'ordre du millimètre, peut délivrer des densités de courant jusqu'à plusieurs centaines de milliampères par centimètre carré avec une chute ohmique acceptable;

b) la durée de vie se trouve augmentée de façon considérable par rapport à une électrode dans laquelle la couche active ou catalytique est globalement mouillable: la demanderesse fait l'hypothèse, sans d'ailleurs que cette interprétation puisse lui être opposée, que ceci est dû au fait que le front liquide-gaz, au lieu d'être, au début de la période de fonctionnement de l'électrode, localisé à l'interface de la couche catalytique et de la couche-support (jouant alors le rôle de couche d'arrêt), se trouve maintenant localisé dans la couche catalytique au voisinage de sa foce au contact de l'électrolyte: la progression, inévitable au cours du temps, de ce front vers la face exposée au gaz l'électrode peut donc se faire pendant une durée très longue sans réduction de la zone réactionnelle dont l'importance se conserve même si elle se déplace, alors qu'elle entraîne une réduction de cette même zone réactionnelle lorsque le front liquide-gaz est déjà, à l'origine, localisé comme dans les électrodes de l'art antérieur;

c) la couche support, présente une remarquable résistance au passage d'électrolyte sous forme de "perlage" ou "weeping" vers le compartiment de gaz même en présence d'une surpression élevée de l'électrolyte par rapport au gaz, et ceci sans relation avec une dimension spécifique des pores de la couche-support; la demanderesse croit encore que ceci est dû au fait que la couche support, qui ne joue plus le rôle d'une couche d'arrêt au sens de cette fonction dans les électrodes de l'art antérieur en raison de la localisation nouvelle du front gaz-liquide, n'a à assurer le "blocage" que des quelques filets de liquide qui pourraient, en raison de défauts locaux possibles de la couche active ou catalytique, avoir traversé celle-ci de part en part, et que son seul caractère hydrophobe y suffit;

d) l'apport par diffusion du réactif gazeux à la zone réactionnelle est suffisant pour assurer une densité de courant de plusieurs centaines de milliampères par centimètre carré sans qu'il soit nécessaire d'utiliser un agent porophore pour conférer à l'une ou à l'autre des couches une porosité donnée: la porosité, même de valeur modeste, créée naturellement par le mélange des constituants des couches apparait suffisants.

Ainsi donc, la présence d'une teneur importante en liant dans les deux couches de l'électrode contribue, ainsi qu'il a déjà été mentionné, à l'obtention d'une électrode cohérente, thermiquement dilatable et rétractable cycliquement sans dommages, et qui peut subir de nombreuses manipulations, courbures, pliages, frottements, abrasions, etc.; son épaisseur très faible lui confère une très grande souplesse, ce qui facilite son montage dans les générateurs électrochimiques.

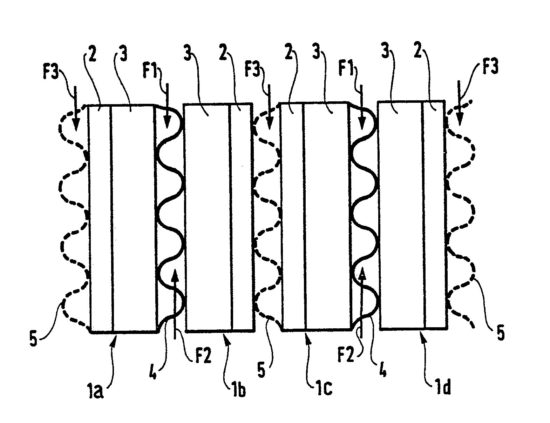

L'invention sera décrite ci-après plus en détail à l'aide d'un exemple donné à titre purement illustratif mais nullement limitatif en référence à la figure annexée.

L'électrode de l'élément selon l'invention comporte donc uniquement deux couches, à savoir une couche active ou catalytique et une couche support, dont les rôles ont été rappelés dans ce que précède.

La couche active ou catalytique présente une épaisseur de l'ordre de 5 à 100 $\mu$m et de préférence 20 à 50 $\mu$m, tandis que celle de la couche support peut varier de 45 à 500 $\mu$m, et de préférence 100 à 200 $\mu$m, de telles épaisseurs demeurant faibles dans tous les cas. L'électrode présente donc une épaisseur totale comprise entre 50 et 600 microns et préférentiellement de 100 à 250 $\mu$m.

En outre ces deux couches comportant 60 à 99% d'un liant ou polymère hydrophobe tel que le polytétrafluoréthylène (PTFE), le polypropylène, le chlorure de polyvinyle etc. et préférentiellement le premier, le reste étant du carbone sous forme divisée pour la couche support et du carbone sous forme divisée chargé an catalyseur ou associé à un catalyseur dans le cas de la couche active ou catalytique.

La porosité de telles couches peut varier de 10 à 80% et sa résistivité électrique de 0,04 à 1 ohm. cm.

Il faut noter que dans le domaine des faibles épaisseurs et des faibles porosités des électrodes selon l'invention, il est apparu de manière surprenante qu'il est néanmoins possible d'assurer un apport suffisant de réactifs gazeux pour permettre d'obtenir des densités de courant de l'ordre de 300 mA/cm$^2$ pour l'hydrogène et 200 mA/cm$^2$ pour l'air.

Avantageusement, une telle électrode est obtenue par mise en oeuvre d'un des procédés décrits dans deux demandes de brevets européens N° 80106331.4 et N° 80106332.2 déposées le même jour que la présente demande et publiées sous les numéros 0027 648 et 0028 729.

Dans la première de ces demandes, de telles bandes et notamment des électrodes pour pile à combustible sont obtenues par passage du matériau constituant ces bandes entre les rouleaux d'une calandreuse, ledit matériau étant sous forme d'un mélange pulvérulent de carbone et de liant exempt de tout produit porophore, ce calandrage étant effectué à température sensiblement amblante.

Des bandes, et notamment des électrodes multicouches, sont réalisées par cocalandrage d'au moins deux bandes.

Dans la deuxième de ces demandes, de telles bandes et notamment des électrodes pour pile à combustible sont réalisées par étalement sous forme de couche d'une dispersion de fibres de graphite ou de carbone et de particules d'un liant, puis par élimination de l'eau et mise à l'épaisseur désirée, une telle épaisseur pouvant d'ailleurs être inférieure à quelques dizaines de micromètres.

Pour réaliser des bandes multicouches et notamment des électrodes on étale les dispersions les unes sur les autres, avant élimination de l'eau.

Outre les avantages précités on notera que l'absence de produits porophores lors de la réalisation des électrodes de l'invention conduit à l'obtention de pores constitués par les interstices de l'empilement des particules du mélange carbone-liant de départ. Il n'y a donc point de risque, malgré la faible épaisseur des couches, de créer des macroporosités nuisibles, et la structure est macroscopiquement homogène.

Des éléments conformes à l'invention peuvent donc être aisément intégrés dans des structures de piles à combustible du type filtre-presse, par exemple du type de celle décrite dans le document DE—A—25 02 738, dans lesquelles la collection du courant peut être assurée au moyen de collecteurs à points ou à lignes distants de quelques millimètres, par exemple par un collecteur gaufré bipolaire comme mentionné dans ce qui précède.

Généralement, un tel collecteur peut être constitué de n'importe quelle matière conductrice; avantageusement il peut être formé d'une feuille de matière plastique, par exemple de polypropylène chargée de poudres ou fibres conductrices, notamment de poudres ou fibres de carbone ou leur mélange. Le contact entre le collecteur et l'électrode est assuré soit par pression, soit, et de préférence, par soudure, ou par collage au moyen d'une colle conductrice, de préférence une résine époxy chargée de poudre de carbone. On constate en effet que la soudure ou le collage assurent un maintien permanent de la qualité du contact malgré l'évolution dimensionnelle de la structure entraînée par les cycles thermiques, de marche et d'arrêt, le fluage des matières plastiques, etc.

La figure annexée illustre donc schématiquement une pile à combustible du type filtre-presse dans laquelle on met en oeuvre des éléments selon l'invention.

Bien entendu, par souci de clarté du dessin, les épaisseurs des électrodes ont été volontairement très exagérées.

Une telle pile comporte donc des électrodes 1a, 1b, 1c, 1d... telles que précédemment décrites, à savoir que chacune comporte une couche active ou catalytique 2, et une couche support 3.

Les électrodes 1a et 1b d'une part et 1c et 1d d'autre part sont en contact avec un collecteur métallique ou plastique conducteur gaufré 4 par l'intermédiaire de leurs couches support 3. Les flèches F1 et F2 matérailisent les alimentations en combustible et en comburant respectivement.

Par ailleurs, les électrodes 1b et 1c sont en contact avec l'électrolyte et une membrane poreuse et gaufrée 5 par l'intermédiaire de leurs couches actives ou catalytiques 2, la flèche F3 matérialisant l'alimentation en électrolyte. De façon similaire, l'électrode 1a et l'électrode précédente (non représentée) ainsi que l'électrode 1d et l'électrode suivante (non représentée) sont en contact mutuel par l'intermédiaire de leurs couches actives ou catalytiques 2 avec une membrane 5, et ainsi de suite.

Un tel ensemble est donc serré de façon à constituer une structure du type filtre-presse.

On va donner un exemple précis d'une électrode selon l'invention:

| | Epaisseur en $\mu$m | Porosité en % | Carbone en % | PTFE en % |
|---|---|---|---|---|
| Couche support | 200 | 30 | 18 | 82 |
| Couche active ou catalytique | 50 | 30 | 40 | 60 |

Le carbone utilisé dans la couche catalytique comporte 20% en poids de platine déposé sur lui.

L'invention trouve des applications avantageuses dans des piles à combustible alimentées par des réactifs gazeux du type hydrogèneair ou méthanol-air par exemple.

**Revendications**

1. Elément pour générateur électrochimique comprenant une électrode poreuse plane (1a, 1b, 1c, 1d), un collecteur de courant (4) en contact avec une des faces de ladite électrode et une membrane (5) en contact avec l'autre face, caractérisé par le fait que ladite électrode comprend uniquement une couche active ou catalytique (2) et une couche support (3), l'épaisseur de ladite électrode (1a, 1b, 1c, 1d) étant comprise entre 50 et 600 $\mu$m environ, la couche active ou catalytique (2) et la couche support (3) comportant chacune en poids 60 à 99% d'un polymère ou liant hydrophobe, et 40 à 1% d'un composé conducteur divisé à base de carbone, ledit composé conducteur constitutif de la couche catalytique étant chargée ou associé à un catalyseur de la réaction électrochimique concernée, les deux dites couches étant globalement hydrophobes et intimement liées, le prélèvement du courant étant effectué par points ou par lignes mutuellement espacés d'une distance de l'ordre du millimètre au moyen du collecteur (4) qui est gaufré et qui est en contact avec ladite couche support (3) de l'électrode et la couche support (3) d'une électrode voisine, la membrane (5) poreuse et gaufrée étant en contact avec la couche active (2) de l'électrode et la couche (2) d'une électrode voisine.

2. Elément selon la revendication 1, caractérisé par le fait que l'épaisseur de ladite couche active ou catalytique (2) est comprise entre 5 et 100 $\mu$m sensiblement et de préférence, entre 20 et 50 $\mu$m.

3. Elément selon l'une des revendications 1 ou 2, caractérisé par le fait que l'épaisseur de ladite couche support (3) est comprise entre 45 et 500 $\mu$m sensiblement et de préférence entre 100 et 200 $\mu$m.

4. Elément selon l'une des revendications 1 à 3, caractérisé par le fait que ledit polymère hydrophobe comporte du polytétrafluoréthylène.

5. Elément selon l'une des revendications 1 à 3, caractérisé par le fait que ledit polymère hydrophobe comporte du polypropylène ou du chlorure de polyvinyle.

6. Elément selon l'une des revendications 1 à 5, caractérisé par le fait que le matériau divisé à base de carbone est du carbone pulvérulent, préférentiellement du noir de carbone ou du carbone actif.

7. Elément selon l'une des revendication 1 à 5, caractérisé par le fait que le matériau divisé à base de carbone est du carbone ou du graphite en fibres.

8. Elément selon l'une des revendications 1 à 7, caractérisé par le fait que la porosité des couches support (3) et active ou catalytique (2) est comprise entre 10 et 80%.

9. Elément selon l'une des revendications 1 à 8, caractérisé par le fait que ledit collecteur (4) est un collecteur gaufré du type bipolaire comportant une feuille conductrice imperméable définissant avec les électrodes des intervalles formant les canaux d'écoulement des gaz réactifs.

10. Elément selon l'une des revendications 1 à 9, caractérisé par le fait que le contact entre ledit collecteur (4) et ladite électrode est réalisé par pression.

11. Elément selon l'une des revendications 1 à 9, caractérisé par le fait que le contact entre ledit collecteur (4) et ladite électrode est réalisé par soudure.

12. Elément selon l'une des revendications 1 à 9, caractérisé par le fait que le contact entre ledit collecteur (4) et ladite électrode est réalisé par collage au moyen d'une colle conductrice.

13. Elément selon la revendication 1, caractérisé en ce que l'épaisseur de l'électrode (1a, 1b, 1c, 1d) est comprise entre 100 et 250 $\mu$m.

14. Générateur électrochimique, et notamment pile à combustible du type filtre-presse, formé d'un empilement d'éléments selon l'une des revendications précédentes.

## Patentansprüche

1. Element für einen elektrochemischen Generator, das eine ebene poröse Elektrode (1a, 1b, 1c, 1d), einen Stromkollektor (4) in Kontakt mit einer der Flächen der Elektrode und eine Membran (5) in Kontakt mit der anderen Fläche aufweist, dadurch gekennzeichnet, daß die Elektrode nur eine aktive oder katalytische Schicht (2) und eine Trägerschicht (3) aufweist, wobei die Dicke der Elektrode (1a, 1b, 1c, 1d) zwischen etwa 50 und 600 $\mu$m liegt, die aktive oder katalytische Schicht (2) und die Trägerschicht (3) je 60 bis 99 Gew.% eines Polymers oder hydrophoben Bindemittels und 40 bis 1% eines geteilten leitenden Stoffes auf Kohlenstoffbasis aufweist, wobei der die katalytische Schicht bildende leitende Stoff mit einem Katalysator der betroffenen elektrochemischen Reaktion geladen oder verbunden ist, wobei die beiden genannten Schichten im ganzen hydrophob und eng miteinander verbunden sind, wobei die Entnahme des Strome punkt- oder linienförmig erfolgt, wobei die Punkte oder Linien einen gegenseitigen Abstand von etwa einem Millimeter aufgrund des Kollektors (4) besitzen, der waffelförmig ist und mit der Trägerschicht (3) der Elektrode und der Trägerschicht (3) einer benachbarten Elektrode in Kontakt steht, wobei die poröse und waffelförmige Membran (5) mit der aktiven Schicht (2) der Elektrode und der Schicht (2) einer benachbarten Elektrode in Kontakt steht.

2. Element nach Anspruch 1, dadurch gekennzeichnet, daß die Dicke der aktiven oder katalytischen Schicht (2) im wesentlichen zwischen 5 und 100 $\mu$m, vorzugsweise zwischen 20 und 50 $\mu$m liegt.

3. Element nach einem der Ansprüche 1 oder 2, dadurch gekennzeichnet, daß die Dicke der Trägerschicht (3) im wesentlichen zwischen 45 und 500 $\mu$m und vorzugsweise zwischen 100 und 200 $\mu$m liegt.

4. Element nach einem der Ansprüche 1 bis 3, dadurch gekennzeichnet, daß das hydrophobe Polymer Polytetrafluoräthylen aufweist.

5. Element nach einem der Ansprüche 1 bis 3, dadurch gekennzeichnet, daß das hydrophobe Polymer Polypropylen oder Polyvinylchlorid aufweist.

6. Element nach einem der Ansprüche 1 bis 5, dadurch gekennzeichnet, daß der geteilte Stoff pulverförmiger Kohlenstoff ist, vorzugsweise Kohlenstoffruß oder Aktivkohle.

7. Element nach einem der Ansprüche 1 bis 5, dadurch gekennzeichnet, daß der geteilte Stoff aus Kohlenstoff- oder Graphitfasern besteht.

8. Element nach einem der Ansprüche 1 bis 7, dadurch gekennzeichnet, daß die Porosität der Trägerschicht (3) und der aktiven oder katalytischen Schicht (2) zwischen 10 und 80% liegt.

9. Element nach einem der Ansprüche 1 bis 8, dadurch gekennzeichnet, daß der Kollektor ein waffelförmiger Kollektor vom bipolaren Typ ist, der eine undurchlässige leitende Folie aufweist, die mit den Elektroden Zwischenräume bildet, die die Durchlaßkanäle für die reagierenden Gase darstellen.

10. Element nach einem der Ansprüche 1 bis 9, dadurch gekennzeichnet, daß der Kontakt zwischen dem Kollektor (4) und der Elektrode durch Druck hergestellt ist.

11. Element nach einem der Ansprüche 1 bis 9, dadurch gekennzeichnet, daß der Kontakt zwischen dem Kollektor (4) und der Elektrode durch Schweißen hergestellt ist.

12. Element nach einem der Ansprüche 1 bis 9, dadurch gekennzeichnet, daß der Kontakt zwischen dem Kollektor (4) und der Elektrode durch Kleben mit einem leitenden Kleber hergestellt ist.

13. Element nach Anspruch 1, dadurch gekennzeichnet, daß die Dicke der Elektrode (1a, 1b, 1c, 1d) zwischen 100 und 250 μm liegt.

14. Elektrochemischer Generator, und insbesondere Brennstoffzelle vom Filterpressentyp, gebildet durch eine Stapelung von Elementen gemäß einem der vorstehenden Ansprüche.

**Claims**

1. An element for an electrochemical generator comprising a porous plane electrode (1a, 1b, 1c, 1d), a current collector (4) in contact with one of the faces of said electrode and a membrane (5) in contact with the other face, characterized in that said electrode comprises only an active or catalytic layer (2) and a support layer (3), the thickness of said electrode (1a, 1b, 1c, 1d) being between about 50 and 600 μm, the active or catalytic layer (2) and the support layer (3) comprising each 60 to 99 percent by weight of a polymere or hydrophobic binder, and 40 to 1% of a carbon-based divided conductive composition, said conductive composition which constitutes the catalytic layer being charged with or associated to a catalyst of the concerned electrochemical reacton, the two said layers being in all hydrophobic and intimately bonded, the sampling of current being effected by points or by lines which are distanced from each other by about one millimeter, by means of the collector (4) which is goffered and which is in contact with said support layer (3) of the electrode and with the support layer (3) of an adjacent electrode, the porous and goffered membrane (5) being in contact with the active layer (2) of the electrode and the layer (2) of an adjacent electrode.

2. An element according to claim 1, characterized in that the thickness of said active or catalytic layer (2) is sensibly comprised between 5 and 100 μm and preferably between 20 and 50 μm.

3. An element according to one of the claims 1 or 2, characterized in that the thickness of said support layer (3) is sensibly comprised between 45 and 500 μm and preferably between 100 and 200 μm.

4. An element according to one of the claims 1 to 3, characterized in that said hydrophobic binder comprises polytetrafluorethylene.

5. An element according to one of the claims 1 to 3, characterized in that said hydrophobic binder comprises polypropylene or polyvinyl chloride.

6. An element according to one of the claims 1 to 5, characterized in that the carbon-based divided composition comprises powdered carbon, preferably carbon black or active carbon.

7. An element according to one of the claims 1 to 5, characterized in that the carbon-based divided composition is constituted of carbon or graphite fibres.

8. An element according to one of the claims 1 to 7, characterized in that the porosity of the support layer (3) and of the active or catalytic layer (2) is between 10 and 80%.

9. An element according to one of the claims 1 to 8, characterized in that said collector (4) is a goffered collector of the bipolar type comprising an impermeable conducting sheet which defines with the electrodes intervals forming channels for the passage of the reactive gases.

10. An element according to one of the claims 1 to 9, characterized in that the contact between said collector (4) and said electrode is obtained by pressure.

11. An element according to one of the claims 1 to 9, characterized in that the contact between said collector (4) and said electrode is realized by welding.

12. An element according to one of the claims 1 to 9, characterized in that the contact between said collector (4) and said electrode is realized by means of a conductive glue.

13. An element according to claim 1, characterized in that the thickness of said electrode (1a, 1b, 1c, 1d) is between 100 and 250 μm.

14. An electrochemical generator and specifically a fuel cell of the filter-press type, formed of a stack of elements according to one of the preceding claims.